# FASCICULE DE BREVET EUROPEEN

(11) **EP 3 701 163 B1**
(45) Date de publication et mention de la délivrance du brevet: **29.12.2021**
(21) Numéro de dépôt: 17807896.0
(22) Date de dépôt: 25.10.2017
(51) Int. Cl.: F16D 55/38, F16D 59/02, F16D 121/22

(54) **DISPOSITIF DE FREINAGE À COUPLE ÉTAGÉ**
GESTUFTE DREHMOMENTBREMSVORRICHTUNG
STEPPED TORQUE BRAKING DEVICE

(43) Date de publication de la demande: 02.09.2020
(73) Titulaire: Warner Electric Europe SAS, 49124 St-Barthélémy d'Anjou (FR)
(72) Inventeur: BARDON, Arnaud, 49215 Tiercé (FR)
(74) Mandataire: Santarelli
(86) Numéro de dépôt international: PCT/FR2017/052942
(87) Numéro de publication internationale: WO 2019/081820

(56) Documents cités:
- DE-A1- 4 109 740
- DE-A1-102012 019 136
- DE-A1-102016 201 271
- US-B1- 6 211 590
- US-B1- 6 237 730

## Description

La présente invention concerne un dispositif de freinage pour freiner et bloquer un arbre unique ou deux arbres rotatifs indépendants disposés le long d'un axe longitudinal. Le dispositif de freinage comprend au moins
- une unité d'actionnement comprenant au moins un bobinage et deux séries de ressorts montés dans un boîtier fixe,
- deux disques de friction montés coulissant axialement sur l'arbre unique ou sur les deux arbres rotatifs, respectivement,
- un flasque terminal bloqué en rotation,
- un flasque intercalaire bloqué en rotation, mais monté coulissant axialement entre les deux disques de friction, et
- deux armatures magnétiques bloquées en rotation, mais montées coulissant axialement et sollicitées respectivement, au repos, par les deux séries de ressorts, de sorte qu'une des deux armatures magnétiques est poussée contre un des deux disques de friction qui appuie alors sur le flasque intercalaire, qui lui-même appuie sur l'autre disque de friction, qui appuie sur le flasque terminal, et lorsque le bobinage est alimenté en courant, les armatures magnétiques sont sollicitées magnétiquement vers le bobinage, libérant ainsi les deux disques de friction et le flasque intercalaire.

De tels dispositifs de freinage sont notamment mis en oeuvre dans les véhicules de transport industriels électriques ou les systèmes de levage, et plus généralement dans tout type de dispositif comprenant un arbre rotatif, voire deux arbres rotatifs indépendants disposés le long d'un axe longitudinal, afin de générer en cas d'arrêt d'urgence un freinage étagé, progressif ou amorti avec un gradient de force de freinage par palier. Le but est d'éviter tout freinage brusque qui pourrait engendrer une perte du chargement ou des détériorations matérielles.

Le document DE 41 09 740 A montre un dispositif de freinage d'un arbre rotatif comprenant un bobinage, deux séries de ressorts, deux disques de friction, deux armatures magnétiques montées coulissant axialement, ainsi qu'un élement d'isolation magnétique disposé dans une des armatures.

Dans l'art antérieur, on connait le document US6211590B1 qui décrit un dispositif de freinage de ce type pour chariot de manutention, dans lequel les deux armatures magnétiques sont disposées en série le long de l'axe longitudinal X avec deux séries de ressorts sollicitant respectivement chaque armature magnétique. Un bobinage unique permet de commander le déplacement des armatures. Un tel dispositif permet une force de freinage étagée mais limitée pour un encombrement important et nécessite des moyens de contrôle en courant complexes et précis. Ce dispositif de freinage ne peut pas tolérer des variations dimensionnelles des composants.

La présente invention a pour but d'améliorer ce type de dispositif en augmentant très significativement sa force de freinage, tout en empêchant l'usure anticipée qui est couramment constatée avec plusieurs disques. De plus, la présente invention cherche à simplifier les moyens de contrôle électriques du dispositif de freinage tout en tolérant des variations dimensionnelles plus grandes pour les composants.

Dans l'art antérieur, on connait aussi le document DE102016201271 A1 qui décrit un dispositif de freinage de ce type pour chariots de manutention, dans lequel les deux armatures magnétiques sont disposées en parallèle de manière concentrique. Les séries de ressorts sont également disposées en parallèle. Afin de transmettre les forces de poussée des ressorts des armatures magnétiques concentriques au premier disque de friction, il est prévu un élément de transmission de force, sous la forme d'un disque, qui est interposé entre les deux armatures magnétiques concentriques et le premier disque de friction. Cet élément de transmission de force n'est pas sollicité directement par les ressorts, mais par l'une ou l'autre ou les deux armatures magnétiques concentriques. Bien entendu, un tel dispositif de freinage nécessite la mise en œuvre de deux bobinages concentriques reçus dans des logements distincts de la coquille de l'inducteur. La disposition concentrique des armatures et des bobinages a pour conséquence d'augmenter considérablement l'encombrement total du dispositif de freinage, de sorte qu'il est difficile de le loger dans certains carters de moteur.

La présente invention a pour but d'améliorer ce type de dispositif de freinage en réduisant son encombrement, particulièrement dans la direction radiale (diamètre), tout en assurant un freinage étagé ou progressif. De plus, la présente invention cherche à simplifier la conception de ces dispositifs de freinage, afin de faciliter leur montage dans les carters de moteur.

Pour ce faire, la présente invention propose que les armatures magnétiques soient disposées en série le long de l'axe longitudinal X, avec chacune des séries de ressorts sollicitant respectivement une armature magnétique, une série de ressorts traversant l'épaisseur axiale d'une des deux armatures magnétiques pour solliciter l'autre armature magnétique. On peut ainsi dire que les différents éléments du dispositif de freinage sont empilés les uns derrière les autres le long de l'axe X dans l'ordre suivant: inducteur, première armature magnétique, seconde armature magnétique, premier disque de friction, flasque intercalaire, second disque de friction, et enfin flasque terminal, le tout étant traversé en partie ou en totalité par un arbre unique ou par deux arbres indépendants.

Le fait d'associer deux disques de friction, ou davantage, en série à deux armatures magnétiques en série démultiplie la force de freinage du dispositif tout en gardant un encombrement radial identique. Cette configuration assure aussi un parfait alignement des forces de poussée sur les surfaces de friction du dispositif de freinage (le rayon de poussée moyen peut rester identique, alors qu'avec des armatures concentriques le rayon de poussée est intérieur ou extérieur), tout en augmentant la progressivité et l'efficacité de freinage.

Selon une caractéristique intéressante de l'invention, le flasque intercalaire peut être sollicité élastiquement vers le disque de friction adjacent à l'une des deux armatures magnétiques, de manière à se décoller au repos du disque de friction adjacent au flasque terminal. Avantageusement, le flasque intercalaire vient en appui sur une butée fixe sous l'action de la sollicitation élastique, de manière à être décollé au repos des deux disques de friction à la fois. On garantit ainsi que les disques de friction ne sont pas en contact du flasque intercalaire, en l'absence de freinage, ce qui pourrait générer une usure anticipée des disques de friction, gêner le fonctionnement du moteur qui entraine l'arbre ou encore créer des désagréments, comme des bruits indésirables ou une montée en température du dispositif de freinage.

Selon un mode de réalisation pratique, le dispositif de freinage comprend des vis d'assemblage qui relient le flasque terminal à l'unité d'actionnement, au moins certaines de ces vis d'assemblage étant pourvues de gaines de guidage qui forment ensemble la butée fixe pour le flasque intercalaire, qui est sollicité, avantageusement par un ressort monté autour d'une section de la gaine de guidage et qui prend appui sur le flasque terminal. Il est à noter que le déplacement et la butée du flasque intercalaire sont réalisés au moyen d'une seule pièce supplémentaire, étant donné que la gaine de guidage est un élément dont la fonction première est d'assurer l'intégrité du dispositif de freinage en supportant les contraintes de pression et de torsion. Le flasque intercalaire, et avantageusement aussi les deux armatures magnétiques peuvent d'ailleurs être bloqués en rotation par les gaines de guidage tout en coulissant le long ces gaines. Ainsi, ces gaines de guidage remplissent plusieurs fonctions essentielles au bon fonctionnement du dispositif de freinage.

Selon une forme de réalisation, l'unité d'actionnement comprend un bobinage unique, le dispositif de freinage comprenant des moyens de contrôle en courant/tension aptes à contrôler des valeurs de courant/tension maximale et intermédiaire alimentés au bobinage.

En variante, l'unité d'actionnement comprend deux bobinages distincts, avantageusement disposés dans un logement annulaire unique formé par le boitier de l'unité d'actionnement, le dispositif de freinage comprenant des moyens de commutation électrique pour les deux bobinages aptes à délivrer à chacun des deux bobinages uniquement une tension nulle ou une tension maximale.

Selon une forme de réalisation, les deux bobinages peuvent avoir des puissances différentes, de manière à définir un bobinage fort et un bobinage faible. Avantageusement, le rapport de puissance en ampères-tours du bobinage fort/bobinage faible va de 1 à 4, avantageusement de 1 à 3, plus avantageusement de 2 à 3 et de préférence est égal à 2,2 ± 0.2.

Avantageusement, les deux bobinages sont disposés en série le long de l'axe longitudinal X ou en parallèle de manière concentrique.

Selon l'invention, un entrefer intercalaire non magnétique sépare les deux armatures magnétiques. Avantageusement, un entrefer sépare une des deux armatures magnétiques de l'unité d'actionnement. Cet entrefer peut être formé par un élément rapporté, comme un feuillard, une couche appliquée, comme un revêtement, ou encore être formé par une des armatures (ou les deux) et/ou le boitier, par exemple sous la forme d'un ou de plusieurs évidements remplis d'air. Le but de cet ou ces entrefer(s) est de créer un espace non magnétique afin d'éviter des pics d'attraction magnétique résistants au décollement.

Selon une autre caractéristique avantageuse de l'invention, les armatures magnétiques présentent des épaisseurs axiales différentes, l'armature magnétique adjacente à un des disques de friction présentant avantageusement une épaisseur supérieure à celle adjacente à l'unité d'actionnement, avantageusement avec un rapport allant de 1 à 3, avantageusement de 1,5 à 2,2 et de préférence est égal à 1,8 ± 0.2. Lorsque le dispositif de freinage est électriquement alimenté, l'épaisseur réduite de l'armature magnétique la plus proche de l'inducteur permet, lorsqu'elle est venue au contact de l'inducteur, de faciliter le rappel de l'armature la plus éloignée. En effet la faible épaisseur limite le court-circuit de l'électro-aimant.

On peut aussi remarquer que les deux armatures magnétiques, le flasque intercalaire et le flasque terminal se présentent sous la forme de plaques planes (par exemple circulaires, elliptiques ou polygonales) ayan des épaisseurs constantes, des passages centraux et des chants cylindriques avec des échancrures. La conception de ces éléments est donc très simple, ce qui facilite leur assemblage et leur montage sur site.

Le dispositif de freinage peut être mis en oeuvre sur un arbre rotatif unique avec les deux disques de friction montés sur l'arbre unique. En variante, les deux disques de friction peuvent être monté respectivement sur deux arbres rotatifs indépendants, comme c'est le cas dans le document DE102016201271A1.

L'esprit de l'invention réside dans le fait d'étager la force de freinage appliquée sur un ou deux arbres rotatifs en disposant les armatures magnétiques, et éventuellement les bobinages, en série le long de l'axe longitudinal, et non pas en parallèle, comme dans le document DE102016201271A1, afin de réduire la taille ou l'encombrement du dispositif de freinage, d'aligner les forces axiales exercées sur les armatures magnétiques et ainsi d'optimiser les forces transmises aux deux disques de friction.

L'invention sera maintenant décrite plus en détail en référence aux dessins joints, donnant à titre d'exemple non limitatif, un mode de réalisation de l'invention et une variante.

Sur les figures:
La figure 1 est une vue en coupe transversale verticale à travers un dispositif de freinage pour un arbre rotatif selon un premier mode de réalisation de l'invention,
La figure 2 est une vue en perspective explosée du dispositif de freinage de la figure 1,
La figure 3 représente une variante de réalisation de la figure 1 avec deux bobinages en série et deux arbres rotatifs,
La figure 4 représente une variante de réalisation de la figure 1 avec deux bobinages concentriques et deux arbres rotatifs, et
La figure 5 représente un mode de réalisation alternatif , ne formant pas partie de la présente invention, Z ne mettant en oeuvre qu'un seul disque de friction, mais deux bobinages.

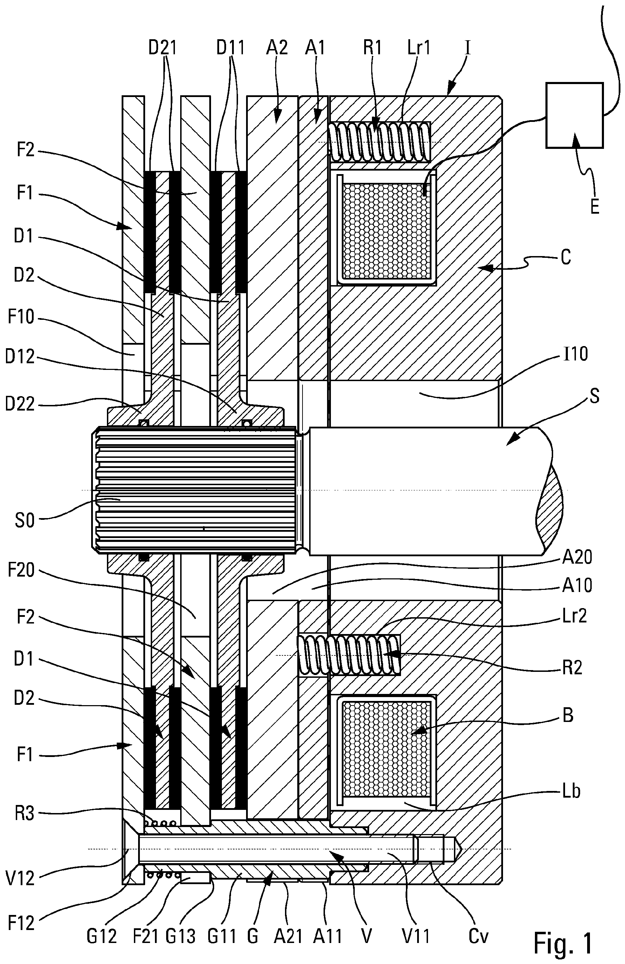

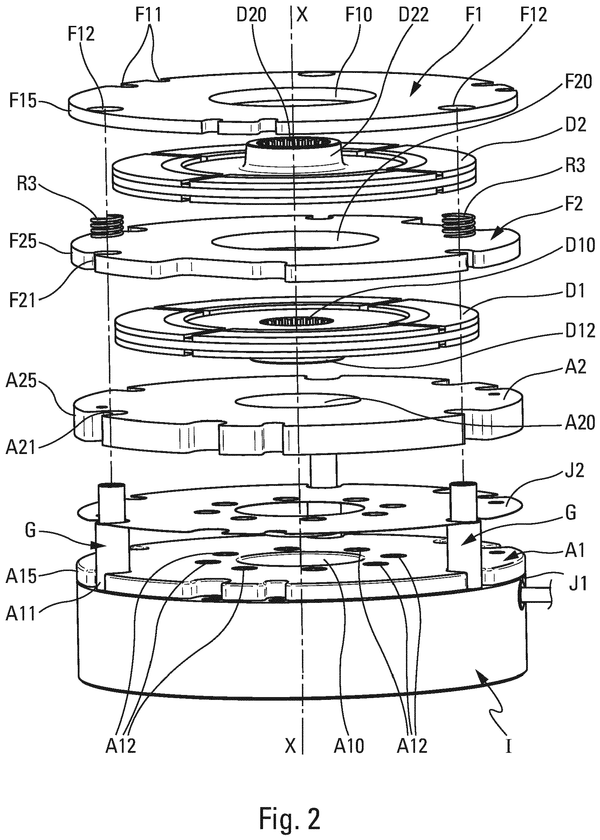

On se référera tout d'abord aux figures 1 et 2 pour expliquer de manière détaillée la structure et le fonctionnement du dispositif de freinage électromagnétique pour un arbre rotatif de l'invention.

Le dispositif de freinage électromagnétique de l'invention, dans le premier mode de réalisation des figures 1 et 2, est monté sur un arbre rotatif unique S, qui comprend un bout d'arbre cannelé S0. Cet arbre S peut par exemple être entrainé en rotation par un moteur électrique. Le dispositif de freinage électromagnétique de l'invention comprend tout d'abord une unité d'actionnement ou inducteur I qui comprend un boîtier C annulaire (cylindre) ou rectangulaire (parallélépipédique) définissant un passage central axial I10 et au moins un logement annulaire (ou elliptique) Lb, dans lequel est reçu au moins un bobinage (ou bobinage d'inducteur) B de fil conducteur. Ce boîtier C, qui est parfois désigné sous le terme de « coquille », comprend également plusieurs alésages borgnes Lr1, Lr2, qui reçoivent chacun un ressort de compression R1, R2. Ces ressorts R1, R2 sont avantageusement montés en étant précontraints et peuvent être des ressorts à boudin classiques ou des rondelles ressort ou tout autre système de poussée mécanique. Le boitier C est en outre pourvu d'alésages borgnes filetés Cv aptes à recevoir des vis d'assemblage V, comme on le verra ci-après.

Le dispositif de freinage comprend également deux plaques de pression mobiles qui sont généralement qualifiées d'armatures magnétiques A1, A2, car elles sont réalisées en un matériau magnétique, comme par exemple de l'acier. Ces armatures magnétiques A1, A2 sont fixes en rotation par rapport à l'axe X, mais mobiles en translation le long de cet axe X sur une course limitée. Le dispositif de freinage comprend également deux disques de friction D1, D2, un flasque terminal F1 et un flasque intercalaire F2. Optionnellement, le dispositif de freinage peut comprendre une ou deux couches intercalaires non magnétiques J1, J2 disposées entre le boitier C et l'armature magnétique A1 et/ou entre les deux armatures magnétiques A1, A2.

Plus précisément, le boîtier C comprend une première série d'alésages borgnes Lr1 et une seconde série d'alésages borgnes Lr2, qui sont réparties autour de l'axe X de manière homogène ou régulière. La profondeur des alésages d'une série à l'autre peut être identique ou différente. Les ressorts R1 sont logés dans les alésages bornes Lr1 et les ressorts R2 sont logés dans les alésages borgnes Lr2. Les ressorts R1 et R2 peuvent être identiques ou différents, notamment quant à leurs raideurs, longueurs, diamètres, états de compression.

Les armatures magnétiques A1, A2 se présentent sous la forme de plaques planes d'épaisseur constante percées de passage centraux axiaux A10, A20 et présentant des chants périphériques cylindriques A15, A25 avec diverses échancrures, dont des échancrures de guidage A11 et A21. Toutefois, l'armature magnétique A2 présente une épaisseur axiale qui est supérieure à celle de l'armature magnétique A1. Avantageusement, le rapport entre les épaisseurs axiales de A2/A1 est de l'ordre de 1,5 à 2,2 et de préférence ce rapport est de l'ordre de 1,8 plus ou moins 20%.

L'armature magnétique A1 est en outre percée de plusieurs alésages traversant A12 pour le passage des ressorts R2. Ainsi, les ressorts R1 appuient contre l'armature magnétique A1 et les ressorts R2 appuient contre l'armature magnétique A2 en traversant l'armature magnétique A1.

Le dispositif de freinage comprend avantageusement un ou deux entrefers J1 et/ou J2 qui sont intercalés entre les deux armatures magnétiques A1, A2 et/ou entre l'armature magnétique A1 et le boitier C. Ces entrefers J1, J2 ont pour fonction de créer un espace non magnétique, afin d'éviter des pics de force magnétiques entre des éléments magnétiques mobiles, ce qui augmente ou garantit la mobilité des éléments magnétiques. L'utilisation d'entrefer permanent entre les deux armatures permet d'avoir un écart relativement important des tensions de libération des armatures, ce qui permet une meilleure contrôlabilité en tension. Ces entrefers J1 et/ou J2 peuvent être formés par un élément rapporté, comme un feuillard en matière plastique, une entretoise en forme de couronne, une couche appliquée, comme un revêtement enduit ou pulvérisé, ou encore être formés par une des armatures (ou les deux) et/ou le boitier, par exemple sous la forme d'un ou de plusieurs évidements remplis d'air, qui peuvent être obtenus par usinage ou apport de matière. L'épaisseur de l'entreferJ1, J2 peut être de l'ordre de 0,02 à 0,5 mm, avantageusement de 0,1 à 0,3 mm et de préférence égal à 0,2 ± 0,05 mm.

Les disques de friction D1, D2 peuvent être identiques, et comprennent chacun un moyeu cannelé D12, D22 définissant un passage central axial D10,D20 qui est en prise coulissante avec le bout d'arbre cannelé S0 de l'arbre unique S. Ainsi, les disques de friction D1, D2 tournent avec l'arbre S, mais peuvent coulisser axialement sur son bout cannelé S0. Les disques de friction D1, D2 présentent une configuration classique avec des garnitures de friction D11, D21 sur les deux faces.

Le flasque intercalaire F2 se présente aussi sous la forme d'une plaque plane d'épaisseur constante percée d'un passage central axial F20 et présentant un chant périphérique cylindrique F25 avec diverses échancrures, dont des échancrures de guidage F21. Le flasque intercalaire F2 est disposé entre les deux disques de friction D1, D2 et remplit de ce fait une fonction de plaque de friction fixe en rotation, mais mobile en translation axial le long de l'axe X. Le flasque intercalaire F2 peut par exemple être réalisé en un métal non magnétique, amagnétique ou magnétique.

Enfin, le flasque terminal F1 se présente aussi sous la forme d'une plaque plane d'épaisseur constante percée d'un passage central axial F10 et présentant un chant périphérique cylindrique F15 avec diverses échancrures F11 et les trous de passage F12 pour des vis d'assemblage V. Plus précisément, ces trous de passage F12 peuvent être fraisés de manière à pouvoir accueillir les têtes V12 des vis d'assemblage V. Le flasque terminal F1 forme la coque externe du dispositif de freinage, à l'opposé du boitier C. En d'autres termes, les armatures magnétiques A1, A2, les disques de friction D1, D2 et le flasque intercalaire F2 sont disposés entre le boitier C et le flasque terminal F1 avec les armatures magnétiques A1, A2 et le flasque intercalaire F2 bloqués en rotation, mais mobiles en translation axial et les disques de friction D1, D2 à la fois mobiles en rotation et en translation axial. Le flasque terminal F1 vient en contact du disque de friction D2 et remplit de ce fait une fonction de plaque de friction à la fois fixe en rotation et en translation axial le long de l'axe X.

Pour le montage des différents éléments constitutifs du dispositif de freinage, il est prévu, comme susmentionné, plusieurs vis d'assemblage V, ici au nombre de trois (exemple non limitatif), qui relient le flasque terminal F1 au boitier C de l'inducteur I. Plus en détail, la broche filetée V11 de la vis d'assemblage V est vissée dans l'alésage borgne fileté Cv du boitier C et la tête V12 est reçue dans le trou de passage F12 du flasque terminal F1. La broche V11 est entourée d'une gaine de guidage G qui peut être réalisée en acier. Cette gaine G comprend une section principale G11 de diamètre accru et une section secondaire G12 de diamètre réduit qui se raccordent entre elles en formant un épaulement annulaire G13. La section principale G11 est reçue dans les échancrures A11 et A21 des deux armatures magnétiques A1 et A2, de manière à les bloquer en rotation, tout en autorisant leur déplacement translatif axial. La section secondaire G12 est reçue dans l'échancrure F21 du flasque intercalaire F2, de manière à le bloquer en rotation, tout en autorisant son déplacement translatif axial. On peut aussi remarquer qu'un ressort R3 est engagé autour de la section secondaire G12 entre les deux flasques F1 et F2. Ce ressort R3 sollicite donc en permanence le flasque intercalaire F2 vers le boitier C ou vers le disque de friction D1 jusqu'à venir en appui contre les trois épaulements annulaires G13 qui forment ainsi ensemble une butée pour le flasque intercalaire F2. Cette position de butée n'est atteinte que lorsque les armatures magnétiques A1 et A2 sont attirées magnétiquement par le bobinage B alimenté en courant. Le flasque intercalaire F2 est alors décollé du disque de friction D2, ainsi que du disque de friction D1, puisqu'il n'est plus poussé par l'armature A2. D'autre part, le dispositif de freinage étant souvent disposé en position transversale dans le véhicule, la position intermédiaire en butée du flasque intercalaire évite les couples résiduels dus à la pression du flasque sur un disque de friction ou l'autre sous l'action de la force centrifuge, notamment lorsque le véhicule prend un virage. Cette caractéristique est particulièrement intéressante pour empêcher l'usure anticipée rapide des garnitures de friction qui est courante avec les systèmes à disques multiples.

Il est à noter que l'utilisation de la gaine G pour déplacer et bloquer le flasque intercalaire F2 est une caractéristique qui peut être mise en oeuvre sans les caractéristiques liées aux deux armatures magnétiques. En d'autres termes, la gaine G avec son épaulement G13 et son ressort R3 pourrait être protégée séparément, de manière à pouvoir s'appliquer à tous les dispositifs de freinage ayant un flasque intercalaire disposé entre deux disques de friction.

Le dispositif de freinage, dans ce mode de réalisation, est en outre pourvu de moyens de contrôle de courant et/ou de tension E pour l'alimentation du bobinage B. Ces moyens de contrôle E sont principalement électroniques et peuvent se présenter sous la forme d'un contrôleur modulable. Ces moyens de contrôle E ont pour but de contrôler le courant et/ou la tension alimentée au bobinage afin de pallier la dérive thermique (montée en température du bobinage qui induit une perte de puissance) et de fixer une intensité intermédiaire apte à permettre le décollement de l'armature A2 sous l'action des ressorts R2, tout en maintenant l'armature A1 collée au boitier C à l'encontre des ressorts R1. Le décollement décalé des armatures A1 et A2 dans le temps permet d'obtenir un freinage efficace avec un effet étagé, évitant ainsi les arrêts trop brusques. Les moyens de contrôle E permettent ainsi de permuter le bobinage B entre trois états: un état non alimenté, un état maximal stabilisé dans lequel les deux armatures A1 et A2 sont plaquées contre le boitier et un état intermédiaire permettant à l'armature A2 de se défaire de l'attraction magnétique du bobinage B. Le passage d'un état à l'autre peut être immédiat ou au contraire graduel dans le temps, de manière à obtenir un amortissement.

Nous allons maintenant décrire un cycle complet de fonctionnement de ce dispositif de freinage. Lorsque le bobinage est au repos, c'est-à-dire non alimenté en courant, les ressorts R1 et R2 agissent pleinement et poussent respectivement les armatures A1 et A2 vers les disques de friction D1 et D2. Plus en détail, l'armature A2 est poussée contre le disque D1, aidée en cela par l'armature A1 qui pousse l'armature A2. Le disque D1 est ainsi poussé contre le flasque intercalaire F2, qui est poussé contre le disque D2, qui appuie contre le flasque terminal F1. On peut dire que les deux armatures A1, A2, les deux disques D1, D2 et le flasque F2 ont été déplacés axialement vers la gauche sur la figure 1 en direction du flasque F1 et en éloignement du boitier C. Les disques D1 et D2 sont ainsi bloqués en rotation et l'arbre S ne peut plus tourner. Le dispositif de freinage agit alors pleinement, bien que son alimentation en courant soit coupée.

Pour débloquer le dispositif de freinage, on agit sur les moyens de contrôles E pour passer de l'état non alimenté à l'état maximal sans passer par l'état intermédiaire. Le bobinage B est alors pleinement alimenté, attirant les deux armatures A1 et A2 simultanément vers le boitier C. Les disques D1 et D2 sont libérés et l'arbre S peut à nouveau tourner. En variante, les moyens de contrôles E peuvent passer immédiatement ou graduellement par l'état intermédiaire de manière à déplacer séquentiellement les deux armatures A1 et A2, et ainsi libérer progressivement les disques D1 et D2. Ceci permet d'obtenir un démarrage plus doux et sans à-coup. Dans un cas ou dans l'autre, une fois les deux armatures plaquées contre le boitier C, les moyens de contrôle E régulent le courant et/ou la tension alimenté(e) au bobinage B, afin que sa puissance d'attraction soit stable.

Lors du freinage, les moyens de contrôle E sont à nouveau sollicités pour passer de l'état d'alimentation maximale à l'état intermédiaire permettant la libération (seule) de l'armature A2, alors que l'armature A1 va rester plaquée contre le boitier C jusqu'à ce que les moyens de contrôle E permutent ensuite sur l'état non alimenté, dans lequel l'armature A1 va également être libérée. L'état intermédiaire peut durer de 0,1 à 10 secondes. Le passage graduel de l'état maximal à l'état intermédiaire et de l'état intermédiaire à l'état non alimenté peut durer de 0,1 à 1 seconde.

Les moyens de contrôle peuvent assurer à eux seuls un fonctionnement correct du dispositif de freinage en ajustant le niveau d'intensité de l'état intermédiaire, la durée de l'état intermédiaire et la dynamique des passages graduels. Toutefois, pour atteindre un fonctionnement optimal et une efficacité maximale, il est avantageux de choisir les épaisseurs des armatures magnétiques A1, A2 dans les domaines de valeurs préconisés ci-dessus, car ces caractéristiques influent directement sur le comportement dynamique des armatures magnétiques A1, A2. Les entrefers J1 et/ou J2, ainsi que la sollicitation élastique avec butée du flasque intercalaire F2 participent également à l'optimisation du dispositif de freinage en terme de sensations agréables, puisque les entrefers J1 et/ou J2 permettent un décollement sans à-coup des armatures et flasque intercalaire F2 laisse les disques de friction libres en rotation.

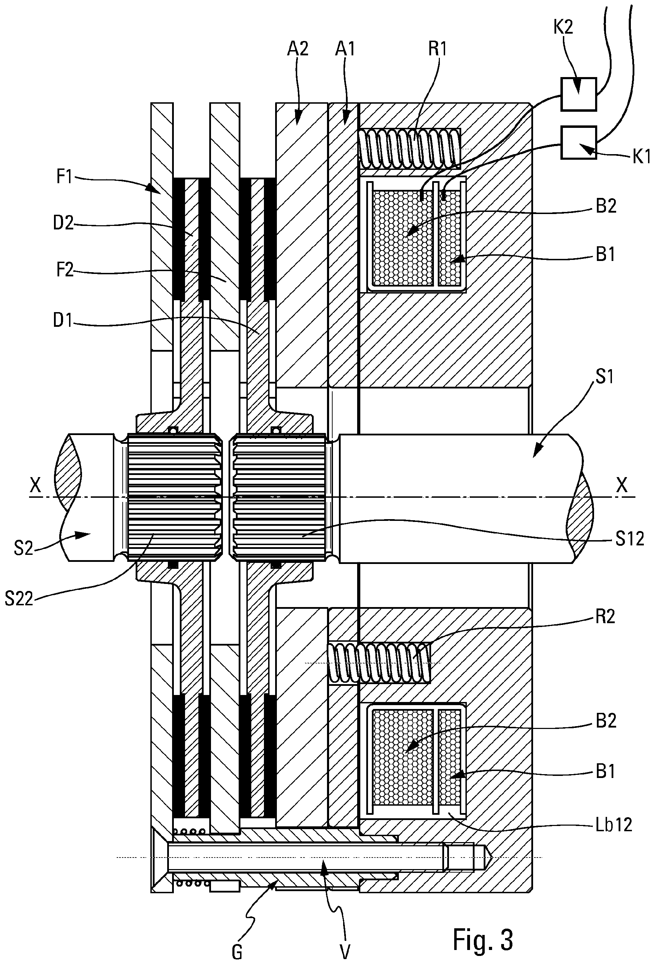

On se référera maintenant à la figure 3 qui décrit un deuxième mode de réalisation qui se différencie du premier mode de réalisation des figures 1 et 2 par deux caractéristiques, à savoir deux arbres rotatifs indépendants, ainsi que la structure et la commande du bobinage.

A la place de l'arbre unique S du premier mode de réalisation, le mode de réalisation de la figure 3 présente deux arbres S1 et S2 indépendants l'un de l'autre, de sorte qu'ils peuvent tourner sur eux-mêmes avec des vitesses de rotation différentes. Les deux arbres S1 et S2 sont disposés de manière parfaitement alignée le long d'un axe longitudinal X. Ils comprennent chacun un bout d'arbre cannelé S12, S22: ces bouts d'arbre se font face sur la figure 3 avec un faible écart. Les arbres S1 et S2 peuvent par exemple être entrainés en rotation par deux moteurs respectifs non représentés, qui font tourner les deux roues avant ou arrière d'un véhicule, comme par exemple un chariot de manutention à fourches.

De plus, à la place du bobinage unique B du premier mode de réalisation, le mode de réalisation de la figure 3 prévoit deux bobinages B1 et B2 qui sont montés en série l'un derrière l'autre le long de l'axe X dans un logement unique Lb12. Il est à noter que la disposition en série n'engendre pas ou peu de modification du premier mode de réalisation, étant donné que le logement unique Lb12 peut être identique ou similaire au logement Lb du premier mode de réalisation. Ainsi, bien qu'il y ait deux bobinages B1 et B2 dans cette variante, cela n'influe pas sur l'encombrement du dispositif de freinage, qui reste toujours aussi compact.

Ces deux bobinages B1 et B2 sont alimentés indépendamment en courant et tension. A la place des moyens de contrôle E qui sont complexes et coûteux, puisqu'électroniques, il est simplement prévu des moyens de commutation électrique, par exemple sous la forme de deux commutateurs ou interrupteurs K1 et K2 qui permettent de passer d'un état d'alimentation nul à un état d'alimentation maximal pour chacun des bobinages B1 et B2. Il suffit donc de séquencer correctement les actionnements consécutifs des deux commutateurs K1 et K2 pour reproduire le fonctionnement des moyens de contrôle E.

Lors d'une opération de freinage, le commutateur K2 est actionné en premier de manière à couper l'alimentation électrique du bobinage B2. Cela a pour effet de libérer l'armature A2, car le bobinage B1 n'est pas assez puissant pour retenir l'armature A2, qui va donc se déplacer contre le disque de friction D1, qui va se déplacer contre le flasque intercalaire F2, qui va lui-même se déplacer contre le disque de friction D2, qui va enfin se déplacer contre le flasque terminal F1. Les deux disques D1 et D2 sont freinés dans leur rotation, mais complètement bloqués. Cette séquence est la même que celle qui se produit dans le premier mode de réalisation, lorsque les moyens de contrôle E passent de l'état maximal à l'état intermédiaire. Au bout d'un laps de temps de l'ordre de 0,1 à 10 secondes après l'actionnement du commutateur K2, le commutateur K1 est à son tour actionné de manière à couper l'alimentation électrique du bobinage B1. Cela a pour effet de libérer l'armature A1 qui va appuyer contre l'armature A2 et apporter ainsi une force de poussée supplémentaire qui va causer le blocage en rotation des deux disques D1 et D2. Un freinage étagé ou progressif est obtenu avec deux bobinages en série commandés par de simples interrupteurs.

Selon l'invention, il est avantageux que le bobinage B2 soit plus puissant que le bobinage B1, afin d'optimiser la commande prioritaire de l'armature A2 par le bobinage B2. On peut ainsi qualifier le bobinage B2 de bobinage fort et le bobinage B1 de bobinage faible. Sur la figure 3, le bobinage fort B2 est situé de manière adjacente à l'armature A1 et le bobinage faible B1 est séparé de l'armature A1 par le bobinage fort B2. Cette disposition n'est pas unique : l'inversion des bobinages est tout à fait possible sans modifier le comportement et l'action des bobinages sur les armatures A1 et A2. Le rapport de puissance (en ampères-tours) du bobinage fort B2/bobinage faible B1 va de 1 à 4, avantageusement de 1 à 3, plus avantageusement de 2 à 3 et de préférence est égal à 2,2 ± 0.2

Ces rapports de puissance de bobinage (fort/faible), cumulés aux rapports d'épaisseurs pour les armatures A1, A2 et aux entrefers J1 et/ou J2 concourent à l'obtention d'un dispositif de freinage produisant un freinage étagé ou progressif particulièrement maîtrisé. La sollicitation élastique avec butée du flasque intercalaire F2 participe également à l'optimisation du dispositif de freinage, puisqu'il réduit significativement les usures anticipées anormales.

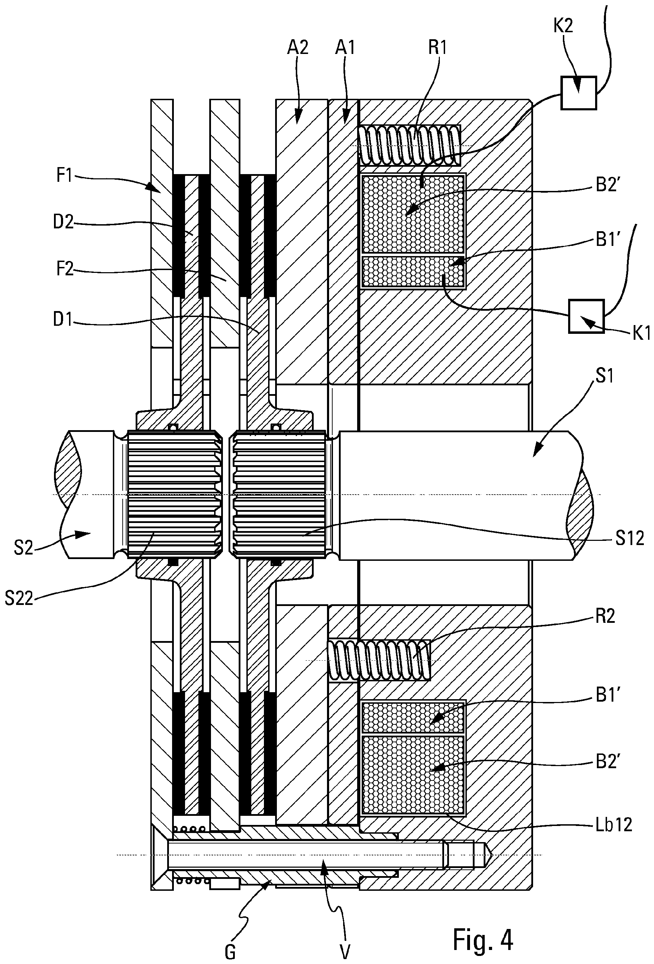

Le mode de réalisation de la figure 4 diffère de celui de la figure 3, uniquement en ce que les deux bobinages en série B1 et B2 ont été remplacés par deux bobinages en parallèle B1'et B2', qui sont disposés de manière concentrique. Le bobinage B1' est disposé à l'intérieur du bobinage B2'. Avantageusement, le bobinage B1' a une puissance inférieure à celui du bobinage B2'. Ainsi, le bobinage B1' peut être qualifié de bobinage faible et le bobinage B2' peut être qualifié de bobinage fort. Il est à remarquer que ce double bobinage concentrique B1', B2' est reçu dans un logement Lb12 qui est identique à celui du mode de réalisation de la figure 3, de sorte que l'encombrement total reste le même. Il faut aussi noter que ce double bobinage concentrique B1', B2' est mis en oeuvre avec la double armature A1, A2 qui est disposée en série.

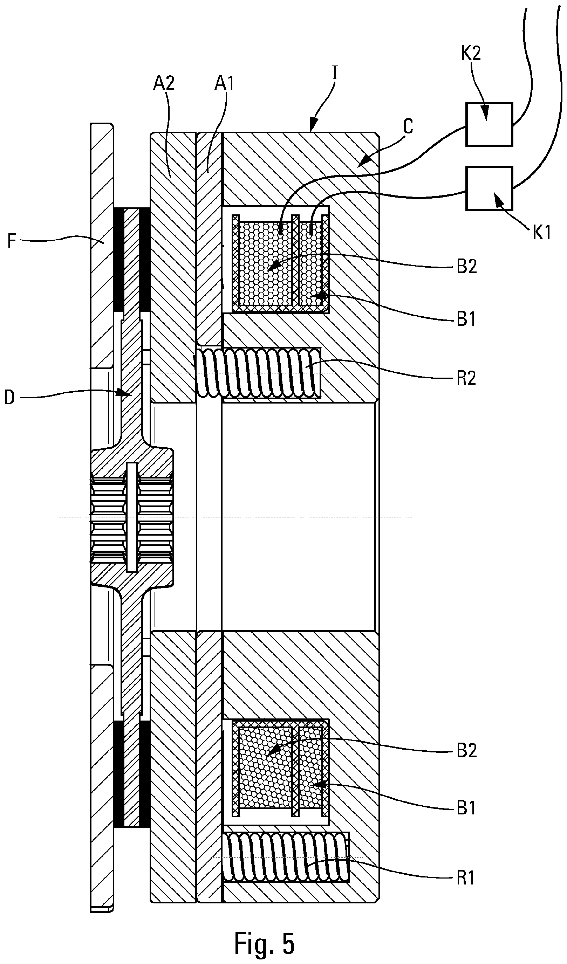

Le mode de réalisation de la figure 5 ne formant pas partie de la présente invention, diffère de celui de la figure 3, en ce qu'il n'y a qu'un seul disque de friction D et plus de flasque intercalaire F2 : il n'y a plus qu'un flasque terminal F. En revanche, il y a bien deux bobinages B1 et B2, dont les caractéristiques peuvent être identiques ou similaires à celles de la variante de la figure 3. En variante non représentée, les deux bobinages peuvent également être montés en parallèle, c'est-à-dire concentriquement. Il en est de même pour les deux commutateurs K1 et K2. Ce mode de réalisation a pour but de montrer qu'une double armature magnétique A1, A2 disposée en série associée à un double bobinage B1, B2 (disposé en série ou en parallèle) peut également être mis en oeuvre sur un seul disque de friction D pris en sandwich entre l'armature A2 et le flasque terminal F, et cela, avec les mêmes avantages de progressivité ou de maîtrise dans le freinage. Il va de soi que ce mode de réalisation particulier peut être protégé indépendamment des deux autres modes de réalisation des figures 1 à 4, qui mettent en oeuvre deux disques de friction.

## Revendications

1. Dispositif de freinage d'au moins un arbre rotatif (S ; S1, S2) s'étendant le long d'un axe longitudinal X, le dispositif de freinage comprenant au moins :
- une unité d'actionnement (I) comprenant au moins un bobinage (B ; B1, B2 ; B1 B2') et deux séries de ressorts (R1, R2) montés dans un boîtier fixe (C),
- deux disques de friction (D1, D2) montés coulissant axialement sur ledit au moins un arbre rotatif (S ; S1, S2),
- un flasque terminal (F1) bloqué en rotation,
- un flasque intercalaire (F2) bloqué en rotation, mais monté coulissant axialement entre les deux disques de friction (D1, D2),
- deux armatures magnétiques (A1, A2) bloquées en rotation, mais montées coulissant axialement et sollicitées respectivement, au repos, par les deux séries de ressorts (R1, R2), de sorte qu'une (A2) des deux armatures magnétiques (A1, A2) est poussée contre un (D1) des deux disques de friction (D1, D2) qui appuie alors sur le flasque intercalaire (F2), qui lui-même appuie sur l'autre disque de friction (D2), qui appuie sur le flasque terminal (F1), et lorsque le bobinage (B ; B1, B2 ; B1', B2') est alimenté en courant, les armatures magnétiques (A1, A2) sont sollicitées magnétiquement vers le bobinage (B ; B1, B2 ; B1', B2'), les armatures magnétiques (A1, A2) étant disposées en série le long de l'axe longitudinal X, avec chacune des séries de ressorts (R1, R2) sollicitant respectivement une armature magnétique (A1, A2), une série de ressorts (R2) traversant l'épaisseur d'une des deux armatures magnétiques (A1) pour solliciter l'autre armature magnétique (A2),
caractérisé en qu'un entrefer intercalaire non magnétique (J2) sépare les deux armatures magnétiques (A1, A2).

2. Dispositif de freinage selon la revendication 1, dans lequel un entrefer intercalaire non magnétique (J1) sépare une (A1) des deux armatures magnétiques (A1, A2) et l'unité d'actionnement (I).

3. Dispositif de freinage selon la revendication 1 ou 2, dans lequel le flasque intercalaire (F2) est sollicité élastiquement (R3) vers le disque de friction (D1) adjacent à l'une des deux armatures magnétiques (A2), à se décoller au repos du disque de friction (D2) adjacent au flasque terminal (F1).

4. Dispositif de freinage selon la revendication 3, dans lequel le flasque intercalaire (F2) vient en appui sur une butée fixe (G13) sous l'action de la sollicitation élastique (R3), de manière à être décollé au repos des deux disques de friction (D1, D2) à la fois.

5. Dispositif de freinage selon la revendication 4, comprenant des vis d'assemblage (V) qui relient le flasque terminal (F1) à l'unité d'actionnement (I), au moins certaines de ces vis d'assemblage (V) étant pourvues de gaines de guidage (G) qui forment ensemble la butée fixe (G13) pour le flasque intercalaire (F2), qui est sollicité, avantageusement par un ressort (R3) monté autour d'une section (G12) de la gaine de guidage (G) et prenant appui sur le flasque terminal (F1).

6. Dispositif de freinage selon la revendication 5, dans lequel le flasque intercalaire (F2), et avantageusement aussi les deux armatures magnétiques (A1, A2), sont bloqués en rotation par les gaines de guidage (G) tout en coulissant le long des gaines de guidage (G).

7. Dispositif de freinage selon l'une quelconque des revendications précédentes, dans lequel l'unité d'actionnement (I) comprend un bobinage unique (B), le dispositif de freinage comprenant des moyens de contrôle en courant/tension (E) pour le bobinage (B) aptes à contrôler des valeurs de courant/tension maximale et intermédiaire.

8. Dispositif de freinage selon l'une quelconque des revendications 1 à 6, dans lequel l'unité d'actionnement (I) comprend deux bobinages (B1, B2 ; B1', B2') avantageusement disposées dans un logement annulaire unique (Lb12) formé par le boitier (C) de l'unité d'actionnement (I), le dispositif de freinage comprenant des moyens de commutation électrique (K1, K2) pour les deux bobinages (B1, B2 ; B1', B2') aptes à délivrer à chacun des deux bobinages (B1, B2 ; B1', B2') uniquement une tension nulle ou une tension maximale.

9. Dispositif de freinage selon la revendication 8, dans lequel les deux bobinages (B1, B2; B1', B2') ont des puissances différentes, définissant ainsi un bobinage fort (B2 ; B2') et un bobinage faible (B1, B1').

10. Dispositif de freinage selon la revendications 9, dans lequel le rapport de puissance en ampères-tours du bobinage fort (B2 ; B2')/bobinage faible (B1 ; B1') va de 1 à 4, avantageusement de 1 à 3 et de préférence est égal à 2,2 ± 0.2.

11. Dispositif de freinage selon la revendication 8, 9 ou 10, dans lequel les deux bobinages (B1, B2 ; B1', B2') sont disposés en série le long de l'axe longitudinal X ou en parallèle de manière concentrique.

12. Dispositif de freinage selon l'une quelconque des revendications précédentes, dans lequel les armatures magnétiques (A1, A2) présentent des épaisseurs axiales différentes, l'armature magnétique (A2) adjacente à un des disques de friction (D1) présentant avantageusement une épaisseur supérieure à celle adjacente à l'unité d'actionnement (I), avantageusement avec un rapport allant de 1,2 à 3, avantageusement de 1,5 à 2,2 et de préférence est égal à 1,8 ± 0.2.

13. Dispositif de freinage selon l'une quelconque des revendications précédentes, dans lequel les deux armatures magnétiques (A1, A2), le flasque intercalaire (F2) et le flasque terminal (F1) se présentent sous la forme de plaques planes ayant des épaisseurs constantes, des passages centraux (A10, A20, F10, F20) et des chants cylindriques (A12, A25, F15, F25) avec des échancrures (A11, A21, F11, F21).

14. Dispositif de freinage selon l'une quelconque des revendications précédentes, dans lequel les disques de friction (D1, D2) sont montés respectivement sur deux arbres rotatifs indépendants (S1, S2).

## Patentansprüche

1. Bremsvorrichtung für zumindest eine rotierende Welle (S; S1, S2), die sich entlang einer Längsachse X erstreckt, wobei die Bremsvorrichtung zumindest enthält:
- eine Betätigungseinheit (I) mit zumindest einer Wicklung (B; B1, B2; B1', B2') und zwei Federsätze (R1, R2), die in einem festen Gehäuse (C) montiert sind,
- zwei Reibscheiben (D1, D2), die axial verschiebbar an der zumindest einen rotierenden Welle (S; S1, S2) gelagert sind,
- einen drehfesten Endflansch (F1),
- einen Zwischenflansch (F2), der drehfest, jedoch axial verschiebbar zwischen den beiden Reibscheiben (D1, D2) gelagert ist,
- zwei Magnetanker (A1, A2), die drehfest, jedoch axial verschiebbar gelagert sind und im Ruhezustand von den beiden jeweiligen Federsätzen (R1, R2) beaufschlagt werden, so dass einer (A2) der beiden Magnetanker (A1, A2) gegen eine (D1) der beiden Reibscheiben (D1, D2) gedrückt wird, die dann auf den Zwischenflansch (F2) drückt, der wiederum auf die andere Reibscheibe (D2) drückt, die auf den Endflansch (F1) drückt, wobei dann, wenn die Wicklung (B; B1, B2; B1', B2') mit Strom versorgt wird, die Magnetanker (A1, A2) magnetisch zur Wicklung (B; B1, B2; B1', B2') hin beaufschlagt werden, wobei die Magnetanker (A1, A2) entlang der Längsachse X in Reihe angeordnet sind und jeder der Federsätze (R1, R2) einen jeweiligen Magnetanker (A1, A2) beaufschlagt, wobei ein Federsatz (R2) sich durch die Dicke eines der beiden Magnetanker (A1) erstreckt, um den anderen Magnetanker (A2) zu beaufschlagen,
**dadurch gekennzeichnet, dass**
ein nichtmagnetischer Luftspalt (J2) die beiden Magnetanker (A1, A2) trennt.

2. Bremsvorrichtung nach Anspruch 1,
wobei ein nichtmagnetischer Luftspalt (J1) einen (A1) der beiden Magnetanker (A1, A2) und die Betätigungseinheit (I) trennt.

3. Bremsvorrichtung nach Anspruch 1 oder 2,
wobei der Zwischenflansch (F2) zur an einen der beiden Magnetanker (A2) angrenzenden Reibscheibe (D1) hin elastisch beaufschlagt wird (R3), um sich im Ruhezustand von der an den Endflansch (F1) angrenzenden Reibscheibe (D2) zu lösen.

4. Bremsvorrichtung nach Anspruch 3,
wobei der Zwischenflansch (F2) unter der Wirkung der elastischen Beaufschlagung (R3) an einen festen Anschlag (G13) zur Anlage kommt, um sich im Ruhezustand von beiden Reibscheiben (D1, D2) zugleich zu lösen.

5. Bremsvorrichtung nach Anspruch 4, enthaltend Verbindungsschrauben (V), die den Endflansch (F1) mit der Betätigungseinheit (I) verbinden, wobei zumindest einige dieser Verbindungsschrauben (V) mit Führungshülsen (G) versehen sind, die zusammen den festen Anschlag (G13) für den Zwischenflansch (F2) bilden, der vorteilhaft von einer Feder (R3) beaufschlagt wird, die um einen Abschnitt (G12) der Führungshülse (G) herum angebracht ist und sich am Endflansch (F1) abstützt.

6. Bremsvorrichtung nach Anspruch 5,
wobei der Zwischenflansch (F2) und vorteilhafterweise auch die beiden Magnetanker (A1, A2) über die Führungshülsen (G) drehfest gehalten werden und dabei entlang der Führungshülsen (G) gleitbeweglich sind.

7. Bremsvorrichtung nach einem der vorhergehenden Ansprüche,
wobei die Betätigungseinheit (I) eine einzelne Wicklung (B) enthält, wobei die Bremsvorrichtung Strom-/Spannungssteuermittel (E) für die Wicklung (B) enthält, die geeignet sind, einen maximalen und einen mittleren Strom- /Spannungswert zu steuern.

8. Bremsvorrichtung nach einem der Ansprüche 1 bis 6,
wobei die Betätigungseinheit (I) zwei Wicklungen (B1, B2; B1', B2') enthält, die vorteilhafterweise in einer einzelnen ringförmigen Aufnahme (Lb12) angeordnet sind, die aus dem Gehäuse (C) der Betätigungseinheit (I) gebildet ist, wobei die Bremsvorrichtung elektrische Schaltmittel (K1, K2) für die beiden Wicklungen (B1, B2; B1', B2') aufweist, die geeignet sind, jeder der beiden Wicklungen (B1, B2; B1', B2') nur eine Nullspannung oder eine maximale Spannung bereitzustellen.

9. Bremsvorrichtung nach Anspruch 8,
wobei die beiden Wicklungen (B1, B2; B1', B2') unterschiedliche Leistungen aufweisen und somit eine stärkere Wicklung (B2; B2') und eine schwächere Wicklung (B1, B1') definieren.

10. Bremsvorrichtung nach Anspruch 9,
wobei das Leistungsverhältnis in Amperewindungen der stärkeren Wicklung (B2; B2') zur schwächeren Wicklung (B1; B1') im Bereich von 1 bis 4, vorteilhafterweise von 1 bis 3 liegt und vorzugsweise gleich 2,2 ± 0,2 ist.

11. Bremsvorrichtung nach Anspruch 8, 9 oder 10,
wobei die beiden Wicklungen (B1, B2; B1', B2') in Reihe entlang der Längsachse X oder konzentrisch parallel angeordnet sind.

12. Bremsvorrichtung nach einem der vorhergehenden Ansprüche,
wobei die Magnetanker (A1, A2) unterschiedliche axiale Dicken aufweisen, wobei der Magnetanker (A2), der an eine der Reibscheiben (D1) angrenzt, vorteilhafterweise eine größere Dicke aufweist als derjenige, der an die Betätigungseinheit (I) angrenzt, vorteilhafterweise mit einem Verhältnis von 1,2 bis 3, vorteilhafterweise von 1,5 bis 2,2 und vorzugsweise gleich 1,8 ± 0,2.

13. Bremsvorrichtung nach einem der vorhergehenden Ansprüche,
wobei die beiden Magnetanker (A1, A2), der Zwischenflansch (F2) und der Endflansch (F1) in Form von flachen Platten mit konstanter Dicke, zentralen Durchgängen (A10, A20, F10, F20) und zylindrischen Stirnseiten (A12, A25, F15, F25) mit Einkerbungen (A11, A21, F11, F21) vorliegen.

14. Bremsvorrichtung nach einem der vorhergehenden Ansprüche,
wobei die Reibscheiben (D1, D2) an zwei jeweiligen unabhängigen, rotierenden Wellen (S1, S2) gelagert sind.

## Claims

1. A braking device of at least one rotary shaft (S; S1, S2) extending along a longitudinal axis X, the braking device comprising at least:
- an actuation unit (I) comprising at least one winding (B; B1, B2; B1', B2') and two series of springs (R1, R2) mounted in a fixed housing (C),
- two friction discs (D1, D2) mounted axially slidable on said at least one rotary shaft (S; S1, S2),
- a rotationally fixed end flange (F1),
- an intermediate flange (F2) that is rotationally fixed but mounted axially slidable between the two friction discs (D1, D2),
- two magnetic armatures (A1, A2) that are rotationally fixed, but mounted axially slidable and biased respectively, when idle, by the two series of springs (R1, R2), in such a way that one (A2) of the two magnetic armatures (A1, A2) is pushed against one (D1) of the two friction discs (D1, D2), which then engages the intermediate flange (F2), which in turn engages the other friction disc (D2), which engages the end flange (F1), and when the winding (B; B1, B2; B1', B2') is supplied with current, the magnetic armatures (A1, A2) are magnetically biased towards the winding (B; B1, B2; B1', B2'), the magnetic armatures (A1, A2) being arranged in series along the longitudinal axis X, with each of the series of springs (R1, R2) respectively biasing a magnetic armature (A1, A2), a series of springs (R2) passing through the thickness of one of the two magnetic armatures (A1) in order to bias the other magnetic armature (A2),
**characterized in that** a non-magnetic intermediate gap (J2) separates the two magnetic armatures (A1, A2).

2. The braking device according to claim 1, wherein a non-magnetic intermediate gap (J1) separates one (A1) of the two magnetic armatures (A1, A2) and the actuation unit (I).

3. The braking device according to claim 1 or 2, wherein the intermediate flange (F2) is elastically biased (R3) towards the friction disc (D1) adjacent to one of the two magnetic armatures (A2), to be separated when idle from the friction disc (D2) adjacent to the end flange (F1).

4. The braking device according to claim 3, wherein the intermediate flange (F2) engages a fixed stop (G13) under the action of the elastic biasing (R3), so as to be separated when idle from both friction discs (D1, D2) at the same time.

5. The braking device according to claim 4, comprising assembly screws (V) that connect the end flange (F1) to the actuation unit (I), at least some of said assembly screws (V) being provided with guide sleeves (G) that together form the fixed stop (G13) for the intermediate flange (F2), which is biased, advantageously by a spring (R3) mounted around a section (G12) of the guide sleeve (G) and bearing on the end flange (F1).

6. The braking device according to claim 5, wherein the intermediate flange (F2), and advantageously also the two magnetic armatures (A1, A2), are rotationally fixed by the guide sleeves (G) while sliding along the guide sleeves (G).

7. The braking device according to any one of the preceding claims, wherein the actuation unit (I) comprises a single winding (B), the braking device comprising current/voltage control means (E) for the winding (B) capable of controlling the maximum and intermediate values of current/voltage.

8. The braking device according to any one of claims 1 to 6, wherein the actuation unit (I) comprises two windings (B1, B2; B1', B2') advantageously arranged in a single annular receptacle (Lb12) formed by the housing (C) of the actuation unit (I), the braking device comprising electric switching means (K1, K2) for the two windings (B1, B2; B1', B2') capable of delivering to each of the two windings (B1, B2; B1', B2') only a zero voltage or a maximum voltage.

9. The braking device according to claim 8, wherein the two windings (B1, B2; B1', B2') have different powers, thus defining a strong winding (B2; B2') and a weak winding (B1, B1').

10. The braking device according to claim 9, wherein the power ratio in ampere-turns of the strong winding (B2; B2')/weak winding (B1; B1') ranges from 1 to 4, advantageously from 1 to 3 and preferably is equal to 2.2 ± 0.2.

11. The braking device according to claim 8, 9 or 10, wherein the two windings (B1, B2; B1', B2') are arranged in series along the longitudinal axis X or concentrically in parallel.

12. The braking device according to any one of the preceding claims, wherein the magnetic armatures (A1, A2) have different axial thicknesses, the magnetic armature (A2) adjacent to one of the friction discs (D1) advantageously having a greater thickness than the one adjacent to the actuation unit (I), advantageously with a ratio ranging from 1.2 to 3, advantageously from 1.5 to 2.2 and is preferably equal to 1.8 ± 0.2.

13. The braking device according to any one of the preceding claims, wherein the two magnetic armatures (A1, A2), the intermediate flange (F2) and the end flange (F1) are in the form of flat plates having constant thicknesses, central passages (A10, A20, F10, F20) and cylindrical edges (A12, A25, F15, F25) with notches (A11, A21, F11, F21).

14. The braking device according to any one of the preceding claims, wherein the friction discs (D1, D2) are mounted respectively on two independent rotary shafts (S1, S2).
